# EUROPÄISCHE PATENTSCHRIFT

(11) **EP 2 306 077 B1**
(45) Veröffentlichungstag und Bekanntmachung des Hinweises auf die Patenterteilung: **05.11.2014**
(21) Anmeldenummer: 10010125.2
(22) Anmeldetag: 22.09.2010
(51) Int. Cl.: F21V 17/00, F21S 8/12, G02B 7/02, G02B 7/00, F21S 8/10, F21Y 101/02

(54) **Kraftfahrzeugscheinwerfer mit einer Temperaturausdehnungen kompensierenden Optik-Halterung**
Motor vehicle headlight with a lens holder which compensates for fluctuations in temperature
Phare de véhicule automobile doté d'un support optique compensant les extensions de température

(30) Priorität: 05.10.2009 DE 102009049558; 17.11.2009 DE 202009017939 U; 10.06.2010 DE 102010023359
(43) Veröffentlichungstag der Anmeldung: 06.04.2011
(73) Patentinhaber: Automotive Lighting Reutlingen GmbH, 72762 Reutlingen (DE)
(72) Erfinder: Stefanov, Emil P., Dr.-Ing., 72762 Reutlingen (DE); Schotten, Uwe, 72072 Tübingen (DE)
(74) Vertreter: DREISS Patentanwälte PartG mbB

(56) Entgegenhaltungen:
- DE-A1-102008 013 603
- DE-A1-102008 027 721
- DE-A1-102008 047 277
- DE-C- 339 895
- US-A1- 2005 121 687

## Beschreibung

Die Erfindung betrifft einen Kraftfahrzeugscheinwerfer mit den Merkmalen des Oberbegriffs des Anspruchs 1. Ein solcher Scheinwerfer ist aus der DE 10 2008 013 603 A1 bekannt.

Der bekannte Scheinwerfer weist eine Anordnung wenigstens einer, eine Lichtaustrittsfläche aufweisenden Halbleiterlichtquelle auf und ist dazu eingerichtet, Licht der Anordnung über eine Primäroptik auf eine Sekundäroptik zu richten, wobei die Primäroptik dazu eingerichtet ist, Licht der Anordnung über eine Lichteintrittsfläche der Primäroptik aufzunehmen und über eine Lichtaustrittsfläche der Primäroptik auszukoppeln. Die Sekundäroptik ist dazu eingerichtet, aus der Lichtaustrittsfläche der Primäroptik ausgekoppeltes Licht über eine Lichteintrittsfläche der Sekundäroptik aufzunehmen. Die Anordnung der wenigstens einen Halbleiterlichtquelle, die Primäroptik und die Sekundäroptik sind durch wenigstens eine Halterung an einer Basisstruktur befestigt.

Durch Aktivieren unterschiedlicher Muster der Anordnung von Halbleiterlichtquellen lassen sich auf der Lichtaustrittsfläche der Primäroptik verschiedene Lichtverteilungen erzeugen.

Die Sekundäroptik ist dazu eingerichtet, eine Lichtverteilung, die sich auf der Lichtaustrittsfläche der Primäroptik oder auf einer vor oder hinter dieser Lichtaustrittsfläche liegenden gedachten Fläche einstellt, in ein vor dem Scheinwerfer liegendes Vorfeld abzubilden sich auf der Lichtaustrittsfläche der Primäroptik einstellende.

Die Lichtaustrittsfläche von Halbleiterlichtquellen, die für Kraftfahrzeugscheinwerfer verwendet werden, befindet sich typischerweise in einem Quadrat mit einer Kantenlänge in einer Größenordnung von einem Millimeter. Um einen möglichst großen Teil des Lichtes aufzunehmen, das von den Halbleiterlichtquellen emittiert wird, beträgt der Abstand zwischen der Lichtaustrittsfläche der Halbleiterlichtquelle und der Lichteintrittsfläche der Primäroptik nur wenige Zehntel eines Millimeters. Die Länge der Primäroptik, die zwischen ihrer Lichteintrittsfläche und ihrer Lichtaustrittsfläche liegt, beträgt typischerweise einige Millimeter. Sie liegt zum Beispiel in einem Bereich von 5 bis 15 mm, wobei diese Bereichsangabe lediglich zur Veranschaulichung typischer Größenverhältnisse dient und bei anderen Beispielen auch außerhalb der angegebenen Grenzen liegen kann.

Halbleiterlichtquellen erreichen im Betrieb Temperaturen von über 100°C. Aufgrund der eng benachbarten Anordnung der Halbleiterlichtquellen und der Primäroptik ergibt sich eine thermische Kopplung, die zu einer Aufheizung der Primäroptik und damit zu einer Änderung von Abständen innerhalb des Scheinwerfers führen kann. Weitere Temperatureinflüsse auf solche Abstände ergeben sich aus der Umgebung des Scheinwerfers. In der Automobiltechnik werden Scheinwerfer-Umgebungstemperaturen erreicht, die über 100°C liegen können. Dies gilt insbesondere bei einem Einbau in der Nähe eines Verbrennungsmotors eines Kraftfahrzeugs. Bei kalter Witterung können die Umgebungstemperaturen auch betragsmäßig hohe Werte im negativen Bereich annehmen.

Es hat sich gezeigt, dass die resultierenden großen Temperaturunterschiede unerwünschte Einflüsse auf Lichttechnische Scheinwerfer-Charakteristika wie die Einkoppelund/oder Auskoppeleffizienz ausüben und damit die Lichtverteilung und damit auch die Erfüllung von gesetzlichen Anforderungen oder von Kundenanforderungen negativ beeinflussen können. Außerdem hat sich gezeigt, dass es bei engen Spaltmaßen zwischen Lichtaustrittsflächen von Halbleiterlichtquellen und Lichteintrittsflächen von Primäroptiken zu mechanischen Beschädigungen der Halbleiterlichtquellen kommen kann.

Eine Verringerung des Abstandes zwischen der Lichtaustrittsfläche der Halbleiterlichtquellen und der Lichteintrittsfläche der Primäroptik kann zum Beispiel zu einem unerwünschten mechanischen Kontakt dieser Flächen und damit zu einer Beschädigung der Halbleiterlichtquelle führen.

Bei Scheinwerfern, die darauf ausgelegt sind, dass sich Lichtaustrittsflächen von Halbleiterlichtquellen und Lichteintrittsflächen von Primäroptiken berühren, ist es von Bedeutung, dass die Flächenpressung der einander berührenden Flächen in tolerierbaren Grenzen bleibt.

Eine Änderung des Abstandes zwischen der Lichtaustrittsfläche der Primäroptik und der Lichteintrittsfläche der Sekundäroptik kann die Abbildung der Lichtverteilung von der Lichtaustrittsfläche der Primäroptik auf die Straße unerwünscht beeinflussen.

Ganz allgemein gilt, dass temperaturbedingte Abstandsänderungen zwischen Lichteintrittsflächen und Lichtaustrittsflächen optischer Elemente in einem Kraftfahrzeugscheinwerfer die optischen Charakteristika des Scheinwerfers unerwünscht beeinflussen können und im Extremfall auch zu Beschädigungen führen können. Dies gilt unabhängig davon, ob die Abstandsänderungen aus einer Wärmeentwicklung von Lichtquellen oder aus anderen Temperatureinflüssen resultieren.

Vor diesem Hintergrund besteht die Aufgabe der Erfindung in der Angabe eines Scheinwerfers, bei dem die unerwünschten Effekte nicht oder zumindest nur in einem verringerten Ausmaß auftreten.

Diese Aufgabe wird mit den Merkmalen des Anspruchs 1 gelöst und weist unter anderem wenigstens eine Halterung auf, mit der eine Anordnung wenigstens einer Halbleiterlichtquelle, eine Primäroptik und eine Sekundäroptik an einer Basisstruktur befestigt sind.

Der erfindungsgemäße Scheinwerfer zeichnet sich dadurch aus, dass diese Halterung dazu eingerichtet ist, einen Wert des Abstands zwischen einer der Lichtaustrittsflächen und der Lichteintrittsfläche, die aus dieser Lichtaustrittsfläche austretendes Licht aufnimmt, in Abhängigkeit von einer im Scheinwerfer auftretenden Temperaturänderung durch eine eigene, thermisch bedingte Längenänderung der wenigstens einen Halterung auf einen Sollwert einzustellen. Der Sollwert ist in einer Ausgestaltung ein konstanter Wert. In einer alternativen Ausgestaltung ist der Sollwert ein von der Temperatur abhängiger Wert, so dass sich ein vorbestimmter Verlauf des Abstands über der Temperatur ergibt.

Diese Merkmale erlauben eine Kompensation thermischer Einflüsse auf Abstände von Komponenten im Lichtweg innerhalb des Scheinwerfers und/oder auf Änderungen der Brechzahl optischer Medien im Scheinwerfer. Die Kompensation erfolgt dabei automatisch und ohne dass dafür zusätzliche Bauelemente wie Temperatursensoren und/oder anzusteuernde Stellglieder vorgesehen werden müssen. Im Ergebnis werden mit geringem Aufwand sonst mögliche Beschädigungen verhindert und/oder Verschlechterungen der optischen Charakteristika verhindert oder zumindest verringert.

Eine bevorzugte Ausgestaltung zeichnet sich dadurch aus, dass die im Oberbegriff des Anspruchs 1 genannte Halterung eine Halterung der Primäroptik aufweist und dass die eine der Lichtaustrittsflächen, deren Abstand zu einer Lichteintrittsfläche nach dem Anspruch 1 temperaturabhängig auf einen Sollwert eingestellt wird, die Lichtaustrittsfläche der Anordnung der wenigstens einen Halbleiterlichtquelle ist.

Diese Ausgestaltung erlaubt eine teilweise oder vollständig erfolgende Kompensation der thermisch bedingten Längenänderung der Primäroptik durch eine entgegengesetzt gerichtete Längenänderung der Halterung der Primäroptik. Als Folge wird eine thermisch bedingte Veränderung eines Abstandes zwischen der Lichtaustrittsfläche der Halbleiterlichtquelle und der Lichteintrittsfläche der Primäroptik verringert, so dass unerwünschte Berührungen beider Flächen vermieden und/oder zwischen beiden Flächen bei Berührung auftretende Druckspitzen verringert werden können.

Ferner erlaubt diese Ausgestaltung das Vermeiden einer unerwünschten Vergrößerung des Abstands zwischen der Lichtaustrittsfläche der Anordnung von Halbleiterlichtquellen und der Lichteintrittsfläche der Primäroptik bei sehr niedrigen Temperaturen, was die Einkoppeleffizienz, also den Anteil des von den Halbleiterlichtquellen emittierten Lichtes, der von der Primäroptik aufgenommen wird, beeinträchtigen könnte.

Bevorzugt ist auch, dass die wenigstens eine Halterung eine Halterung der Sekundäroptik aufweist und dass die eine der Lichtaustrittsflächen die Lichtaustrittsfläche der Primäroptik ist.

Diese Ausgestaltung erlaubt eine Kompensation einer thermisch bedingten Defokussierung der von der Sekundäroptik abgebildeten Lichtverteilung.

Durch eine temperaturbedingte Längenänderung der lichtleitenden Länge der Primäroptik kann die gesamte Lichtaustrittsfläche der Primäroptik entlang der optischen Achse verschoben werden. Dies kann zu einer Defokussierung der Sekundäroptik führen, so dass die sich auf der Lichtaustrittsfläche der Primäroptik einstellende Lichtverteilung nicht in der gewünschten Weise in das Vorfeld des Scheinwerfers abgebildet wird. Dadurch kann zum Beispiel die Lage und/oder der Lichtintensitätsgradient einer Helldunkelgrenze unerwünscht beeinflusst werden.

Eine Temperatur-bedingte Defokussierung kann auch durch eine Ausdehnung brechender und/oder beugender Strukturen der Sekundäroptik sowie durch eine Temperatur-bedingte Änderung einer Brechzahl auftreten. Ein mit steigender Temperatur anwachsender Krümmungsradius einer Linse der Sekundäroptik führt, wie auch eine mit steigender Temperatur abnehmende Brechzahl, zu einer Vergrößerung der Brennweite der Sekundäroptik. Die Erfindung erlaubt eine Kompensation dieser Änderungen durch eine sich selbsttätig mit verändernder Temperatur verändernde Länge einer Halterung der Sekundäroptik.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
- Figur 1: eine Schnittdarstellung eines Kraftfahrzeugscheinwerfers;
- Figur 2: eine Ausgestaltung einer Primäroptik; und
- Figur 3: Querschnitte weiterer Primäroptiken.

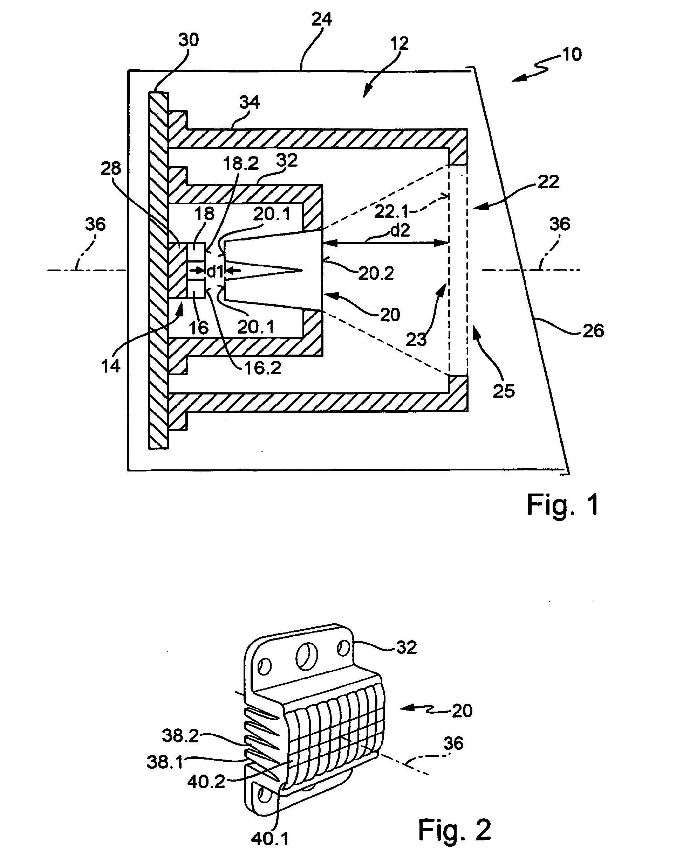

Im Einzelnen zeigt die Fig. 1 eine Schnittdarstellung eines Kraftfahrzeugscheinwerfers 10 mit einem Lichtmodul 12, das eine Anordnung 14 von Halbleiterlichtquellen 16, 18, eine Primäroptik 20 und eine Sekundäroptik 22 aufweist. Das Lichtmodul 12 ist in einem Gehäuse 24 des Kraftfahrzeugscheinwerfers 10 angeordnet. Das Gehäuse 24 weist eine Lichtaustrittsöffnung auf, die von einer transparenten Abdeckscheibe 26 abgedeckt wird.

Die Anordnung 14 von Halbleiterlichtquellen 16, 18 ist in der dargestellten Ausgestaltung auf einer Platine 28 angeordnet. Dabei wird unter einer Halbleiterlichtquelle eine Anordnung von Halbleiteremittern verstanden, die monolithisch oder in diskreter Form realisiert sein können, und die auf einem Schaltungsträger aufgebracht sind, der dazu geeignet ist, wenigstens einen Teil der von dem Halbleiteremittern erzeugten Wärme abzuführen. Zur Abführung der Wärme wird in einer bevorzugten Ausgestaltung ein Kühlkörper verwendet, der Wärme an die Umgebung abstrahlt und/oder der selbst vom Luftstrom eines Ventilators gekühlt wird. Die Halbleiterlichtquellen 16, 18 weisen jeweils eine Halbleiterlichtquellen-individuelle Lichtaustrittsfläche 16.2, 18.2 auf.

Der Kraftfahrzeugscheinwerfer 10 ist dazu eingerichtet, Licht der Anordnung 14 über die Primäroptik 20 auf die Sekundäroptik 22 zu richten, wobei die Primäroptik 20 dazu eingerichtet ist, Licht der Anordnung 14 über eine Lichteintrittsfläche 20.1 der Primäroptik 20 aufzunehmen und über eine Lichtaustrittsfläche 20.2 der Primäroptik 20 auszukoppeln. Die Sekundäroptik 22 ist dazu eingerichtet, aus der Lichtaustrittsfläche 20.2 der Primäroptik 20 ausgekoppeltes Licht über eine Lichteintrittsfläche 22.1 der Sekundäroptik 22 aufzunehmen. Im Übrigen ist die Sekundäroptik 22 dazu eingerichtet, eine sich auf Lichtaustrittsfläche 20.2 der Primäroptik 20 einstellende Lichtverteilung in das Vorfeld vor dem Scheinwerfer 10 und damit insbesondere auf eine vor dem Fahrzeug liegende Fahrbahn abzubilden.

Die Anordnung 14 der wenigstens einen Halbleiterlichtquelle 16, 18, die Primäroptik 20 und die Sekundäroptik 22 sind durch wenigstens eine Halterung an einer Basisstruktur 30 befestigt. In der dargestellten Ausgestaltung besteht die Halterung aus drei separaten Teilen, nämlich aus der Platine 28, mit der die Anordnung 14 der Halbleiterlichtquellen an der Basisstruktur 30 befestigt ist, einer Halterung 32 der Primäroptik 20 und einer Halterung 34 der Sekundäroptik 22.

Der Scheinwerfer 10 zeichnet sich dadurch aus, dass die wenigstens eine Halterung 32 der Primäroptik 20 dazu eingerichtet ist, einen Wert eines Abstands d1 zwischen der Lichtaustrittsfläche 16.2, 18.2 der Halbleiterlichtquellen 16, 18 und der Lichteintrittsfläche 20.1 der Primäroptik 20, die aus dieser Lichtaustrittsfläche 16.2, 18.2 austretendes Licht aufnimmt, in Abhängigkeit von einer im Scheinwerfer 10 auftretenden Temperaturänderung durch eine eigene, thermisch bedingte Längenänderung der wenigstens einen Halterung 32 auf einen Sollwert einzustellen.

In dieser Ausgestaltung weist die wenigstens eine Halterung eine Halterung 32 der Primäroptik 20 auf, und die eine der Lichtaustrittsflächen ist die Lichtaustrittsfläche 16.2, 18.2 der Anordnung 14 der wenigstens einen Halbleiterlichtquelle 16, 18.

Alternativ oder ergänzend zeichnet sich der Scheinwerfer 10 dadurch aus, dass die wenigstens eine Halterung 34 der Sekundäroptik 22 dazu eingerichtet ist, einen Wert eines Abstands d2 zwischen der Lichtaustrittsfläche 20.2 der Primäroptik 20 und der Lichteintrittsfläche 22.1 der Sekundäroptik 22, die aus dieser Lichtaustrittsfläche 20.2 austretendes Licht aufnimmt, in Abhängigkeit von einer im Scheinwerfer 10 auftretenden Temperaturänderung durch eine eigene, thermisch bedingte Längenänderung der wenigstens einen Halterung 34 auf einen Sollwert einzustellen.

Losgelöst von diesen speziellen Ausgestaltungen zeichnet sich ein erfindungsgemäßer Scheinwerfer ganz allgemein dadurch aus, dass die wenigstens eine Halterung der Primäroptik dazu eingerichtet ist, einen Wert eines Abstands zwischen einer der Lichtaustrittsflächen und der Lichteintrittsfläche, die aus dieser Lichtaustrittsfläche austretendes Licht aufnimmt, in Abhängigkeit von einer im Scheinwerfer auftretenden Temperaturänderung durch eine eigene, thermisch bedingte Längenänderung der wenigstens einen Halterung auf einen Sollwert einzustellen.

Bei der Sekundäroptik 22 handelt es sich bevorzugt um eine achromatisch wirkende Anordnung aus zwei Linsen 23, 25 mit unterschiedlicher Brechzahl, die durch das jeweilige Material und die Form der beiden Linsen 23, 25 eine Farbfehler korrigierende Doppellinse darstellt.

Die Sekundäroptik 22 ist insbesondere dazu eingerichtet, die Lichtverteilung, die sich auf der Lichtaustrittsfläche 20.2 der Primäroptik 20 einstellt, ausreichend scharf und farbtreu auf die Fahrbahn zu projizieren. Da diese Lichtverteilung je nachdem, welche Halbleiterlichtquellen 16, 18 der Anordnung 14 der Halbleiterlichtquellen 16, 18 eingeschaltet sind, sowohl horizontale als auch vertikale Kanten in Form von Hell-Dunkel-Grenzen aufweist, muss die Farbkorrektur sowohl horizontal als auch vertikal besonders gut gelingen. Die Anordnung 14 von Halbleiterlichtquellen weist bevorzugt eine Matrix-artige Anordnung einer Vielzahl in einer Größenordnung von 10 bis 100 Halbleiterlichtquellen auf.

Die Farbfehler ergeben sich als Folge einer Farbdispersion, also als Folge von Brechzahlwerten, die sich mit der Wellenlänge ändern. Kurzwelligere Lichtanteile werden stärker gebrochen als langwelligere Lichtanteile. Mit anderen Worten: Blaue Lichtanteile werden stärker gebrochen als grüne Lichtanteile und diese werden stärker als rote Lichtanteile gebrochen. Mit einer unbehandelten Einzellinse kann die materialbedingte Farbdispersion optischer Materialien nicht kompensiert werden.

Aufgrund der Wellenlängenabhängigkeit der Brechzahlwerte variiert die Brennweite einer Einzellinse mit der Wellenlänge. Dieser Effekt führt dazu, dass insbesondere an den Rändern abzubildender scharfkantiger Strukturen Farbsäume sichtbar werden. Die Kanten von Halbleiterlichtquellen-individuellen Teilgrenzflächen der Lichtaustrittsfläche 20.2 der Primäroptik 20 stellen Beispiels solcher Strukturen dar.

Um die Farbsäume zu kompensieren, ist es aus der Astronomie, der Fotographie, der Mikroskopie bekannt, Mehrfachlinsen unterschiedlicher Brechkraft und Abbe-Zahlen oder Einfachlinsen mit speziellen Dispersionsstrukturen einzusetzen. Diese Ansätze basieren auf sorgfältig ausgewählten optischen Glassorten oder auf speziell hergestellten beugenden Strukturen. Sie sind oft mit entsprechend hohen Kosten verbunden, was für eine Verwendung als Serienprodukte im Kraftfahrzeugbau aus wirtschaftlichen Gründen hinderlich ist.

Die genannten Mehrfachlinsen sind als Achromate bekannt. Unter einem Achromat versteht man in der Optik ein System aus zwei Linsen, die aus verschiedenen optischen Materialien mit unterschiedlich starker Dispersion (unterschiedlicher Abbe-Zahl) bestehen. Die Linsen können aus Materialpaarungen hergestellt sein, die Glas, Kunststoff oder Silikon aufweisen. Das System weist eine Sammellinse 25 (bevorzugt aus Kronglas) und eine Zerstreuungslinse 23 (bevorzugt aus Flintglas) mit kleinerer Abbe-Zahl und somit stärkerer Dispersion als die Sammellinse 25 auf.

Die Abbe-Zahl ist eine in der Optik gebrauchte dimensionslose Größe für die Dispersion eines transparenten Mediums. Optisches Flintglas wird als ein Glas mit einer Abbeschen Zahl kleiner als 50 definiert. Die Brechzahl optischer Flintgläser liegt im Bereich von 1,5 bis 2,0. Optisches Kronglas weist dagegen eine vergleichsweise geringere Dispersion (Abbe-Wert > 50) auf.

Durch unterschiedliche Dispersionswerte der Linsenmaterialien lässt sich eine zerstreuende Linse 23 aus Flintglas mit einer Sammellinse 25 aus Kronglas zu einem Achromat kombinieren, also zu einer farbkorrigierten Sammellinse. Die Kronglaslinse 25 wird stärker sammelnd geformt als die Flintglaslinse 23 zerstreuend geformt wird, so dass in der Summe eine Sammelwirkung erreicht wird. Eine sammelnde Kronglaslinse eines Achromaten wird auch als positive Linse bezeichnet, während eine zerstreuend wirkende Flintglaslinse auch als negative Linse bezeichnet wird. Im Idealfall heben sich die konträren Dispersionswirkungen der beiden Linsen gerade auf, so dass unterschiedliche Farben mit gleicher Brechzahl gebrochen werden.

Dadurch kann eine unterschiedliche Brennweite von zwei vordefinierten, verschiedenen Spektralfarben (sogenannter Farblängsfehler), also für zwei Wellenlängen, korrigiert werden. Das bedeutet, dass das System den Farblängsfehler für zwei Spektralfarben kompensiert. Die Kompensation erfolgt dadurch, dass das System für die beiden Spektralfarben gleiche Brennpunkte besitzt.

Die Materialien der beiden Linsen 23 und 25 werden vorzugsweise so gewählt, dass Wellenlängen im Rotspektrum und im Blauspektrum kompensiert werden können. Alternativ können auch Wellenlängen aus dem Blauspektrum und dem Gelbspektrum kompensiert werden. Die Materialauswahl für die Linsen 23, 25 kann in der Praxis auch so vorgenommen werden, dass keine vollständige Achromatisierung erfolgt, jedoch eine deutliche Reduzierung der Farbdispersion und deutlich weniger Farbseparation in der Abbildung erreicht wird.

Eine Doppellinse aus zwei Linsen aus unterschiedlichen Kunststoffarten wie Polycarbonat (PC) und Polymethylmethacrylat (PMMA) ergibt zwar keinen perfekten Achromat, erlaubt aber eine deutliche Reduzierung der Farbdispersion und führt damit zu einer deutlichen Verringerung der unerwünschten Farbseparation in der Abbildung der Hell-Dunkel-Grenzen in der auf die Fahrbahn projizierten Lichtverteilung.

Um eine für Kraftfahrzeugscheinwerfer wirtschaftlich vertretbare Farbfehlerkorrektur zu erzielen, ist es wünschenswert, eine achromatisch wirkende Linsenanordnung mit einer Kombination aus einer Glaslinse und einer Kunststofflinse oder sogar einer Kunststofflinse mit einer Kunststofflinse zu finden und zu realisieren. Im Kraftfahrzeugbau bereits verbreitet eingesetzte optische Kunststoffmaterialien sind PC (Polycarbonat) und PMMA (Polymethacrylat) oder auch der Glastyp B270, bei dem es sich um ein farbloses, hochtransparentes Kronglas handelt. Zum Einsatz kommen zunehmend auch hochtransparente Silikone. PC hat eine Abbe-Zahl von ca. 28..30 und kann als Flintglas eingesetzt werden. Dagegen haben PMMA, B270 und Silikon annähernd gleiche Abbe-Zahlen von ca. 58 bis 62.

Die möglichen Kombinationen sind zwar bei weitem davon entfernt, typische Achromat-Lösungen für diesbezüglich anspruchsvolle optische Aufgaben wie in der Astronomie, der Mikroskopie, oder der Fotografie zu ergeben, haben aber das Potential, die Dispersionseffekte auf ein für Kraftfahrzeuganwendungen erträgliches Maß herabzusetzen.

Eine vorteilhafte Ausgestaltung sieht vor, dass eine achromatisch wirkende Linsenanordnung, die eine solche Kombination aufweist, zusätzlich streuende Oberflächenstrukturen auf der Lichtaustrittsfläche der Linsenanordnung besitzt. Durch solche streuenden Oberflächenstrukturen können ebenfalls Farbeffekte reduziert werden, so dass sich in der Summe bei einer achromatisch wirkenden Linsenanordnung aus einer Kombination der genannten Materialien in Verbindung mit zusätzlichen streuenden Oberflächenstrukturen eine für Kraftfahrzeugscheinwerfer ausreichende Verringerung von Farbfehlern der abbildenden Sekundäroptik ergibt, die sich mit vergleichsweise geringen Kosten erzielen lässt.

In einer vorteilhaften Ausgestaltung besteht die Linsenanordnung aus einer PC-Streulinse und einer B270oder PMMA-Sammellinse, die aufeinander und auf den Rest der Optik angepasst sind.

In einer alternativen Ausgestaltung weist die Sekundäroptik 22 eine achromatisch wirkende Anordnung mit einem Verbund aus einer positiven Sammellinse und einer diffraktiven Optik auf, wobei die diffraktive Optik von ihrer Funktion her die negative Linse ersetzt. In einer Ausgestaltung ist die diffraktive Optik durch eine beugende Strukturierung der Oberfläche oder einer der Oberflächen der Sammellinse realisiert. In dieser Ausgestaltung ergibt sich die farbkorrigierende Wirkung durch eine wenigstens teilweise erfolgende Kompensation einer normalen Dispersion der Linse (blau wird stärker gebrochen als rot) mit der anormalen Dispersion eines Gitters (rot wird stärker gebrochen als blau). Die diffraktive Struktur ersetzt die zerstreuende Linse und besitzt eine Sammelwirkung. Die Sammelwirkung beruht auf Beugungseffekten. Dies erlaubt eine Verkürzung der Brennweite der eigentlichen Sammellinse, was das Abbildungsproblem entspannt. Vorteilhaft ist auch, dass die diffraktive Struktur eine einfacherer Berücksichtigung von Beiträgen einer Asymmetrie der Anordnung und/oder von Beiträgen asphärische Bereiche erlaubt.

Die Halbleiterlichtquellen 16, 18 sind bevorzugt einzeln oder in Gruppen einschaltbar und ausschaltbar, so dass ihr jeweiliger Einfluss auf die Lichtverteilung vor dem Fahrzeug getrennt voneinander und gezielt aktivierbar und deaktivierbar ist.

Die Platine 28 ist in einer bevorzugten Ausgestaltung eine starre Leiterplatte oder eine flexible Leiterplatte. Eine flexible Leiterplatte hat den Vorteil, dass sie eine im Raum gekrümmte, insbesondere konkav gekrümmte Anschlussfläche für die Halbleiterlichtquellen 16, 18 erlaubt, durch die sich bereits eine gewisse bündelnde Wirkung ergibt. Starre Leiterplatten besitzen dagegen den Vorteil geringerer Kosten und einer besseren Handhabbarkeit bei der Herstellung des Scheinwerfers und einer größeren Stabilität.

Bevorzugt ist auch, dass die Platine 28 als bauliche Einheit mit Kühlelementen für die Halbleiterlichtquellen 16, 18 ausgestaltet ist, um die im Betrieb anfallende elektrische Verlustwärme zuverlässig abführen zu können.

Eine optische Achse 36 erstreckt sich im Wesentlichen horizontal von der Anordnung 14 der Halbleiterlichtquellen 16, 18 ausgehend durch die Primäroptik 20 und die Sekundäroptik 22 hindurch. Fig. 1 zeigt insofern einen längs der optischen Achse 36 geschnittenen Scheinwerfer 10 von der Seite, d.h. aus einer quer zur optischen Achse 36 liegenden Blickrichtung.

Figur 2 zeigt eine Ausgestaltung einer baulichen Einheit aus einer Primäroptik 20 und einem Halter 32 der Primäroptik 20 in einer perspektivischen Ansicht. Die Primäroptik 20 umfasst mehrere matrixartig angeordnete Lichtleiterabschnitte 38.1, 38.2, ... mit totalreflektierenden Eigenschaften. Die Lichtleiterabschnitte 38.1, 38.2, ... sind bevorzugt aus Silikon hergestellt. Silikon ist ein hochtransparentes Material und weist eine hohe Temperaturbeständigkeit bis ca. 260°C auf. Bestimmte Silikonarten sind in der Herstellungsphase besonders dünnflüssig und können so während des Spritzgießverfahrens auch in äußerst filigrane Strukturen gespritzt werden. In anderen Ausgestaltungen bestehen die Lichtleiterabschnitte aus Glas, Kunststoff oder einem technisch vergleichbaren Material.

Einander gegenüberliegende Seitenflächen von jedem der Lichtleiterabschnitte 38.1, 38.2 ... laufen auseinander, so dass sich der Querschnitt eines Lichtleiterabschnitts 38.1, 38.2 ... längs einer Richtung vergrößert, die von seiner Lichteintrittsseite her kommt und die sich zu seiner als Lichtaustrittsfläche dienenden Teilgrenzfläche 40.1. 40.2, ... erstreckt.

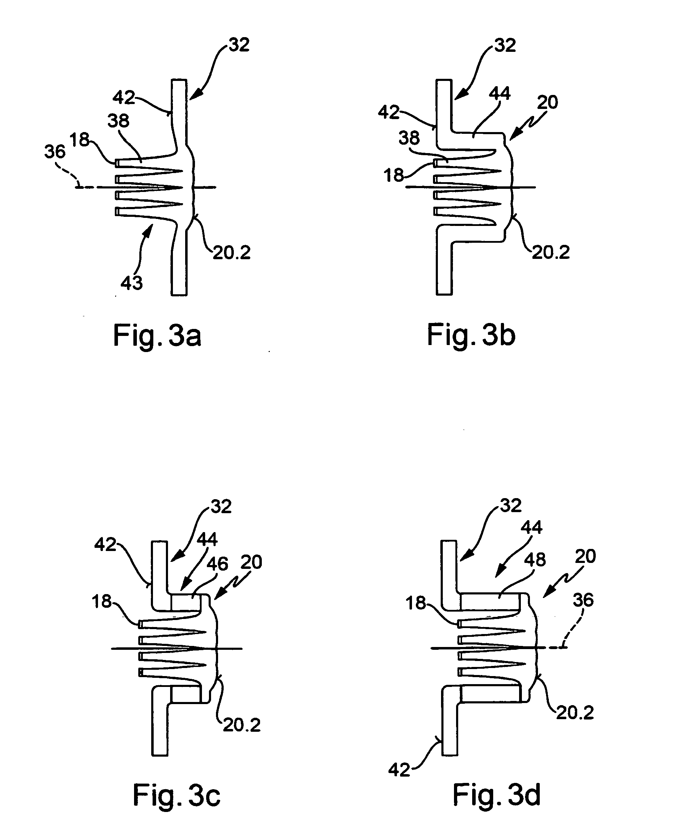

Teilgrenzflächen 40.1. 40.2, ... benachbarter Lichtleiterabschnitte 38.1, 38.2 ... der Primäroptik 20 gehen knickfrei oder, wie in der Fig. 3, nicht knickfrei ineinander über und werden bei der Herstellung des Scheinwerfers 10 nahe der Brennfläche (sog. Petzval-Fläche) der abbildenden Sekundäroptik 22 angeordnet. Durch die Anordnung nahe der sog. Petzval-Fläche wird die Abbildungsschärfe der außen liegenden Randlichtleiterabschnitte 40.1 verbessert. Mehrere nebeneinander und untereinander angeordnete Lichtleiterabschnitte sind zu einer Matrix zusammengefasst. Vor den Lichtleiterabschnitten sind Halbleiterlichtquellen 18 angeordnet.

Die Fig. 3 zeigt Querschnitte verschiedener Primäroptiken mit jeweils an die jeweilige Primäroptik angeformter Halterung 32. Die Auflageflächen 42 sind dabei jeweils dazu eingerichtet, mit der Basisstruktur 30 der Fig. 1 verbunden zu werden, zum Beispiel mit Hilfe von Ausnehmungen, wie sie im Halter 32 der perspektivischen Darstellung der Fig. 2 sichtbar sind und die zur Aufnahme von Befestigungsmitteln wie Schrauben oder Nieten dienen.

Die Auflagefläche 42 der Primäroptik 43 gemäß der Fig. 3a) liegt, in Richtung der optischen Achse 36, nahe an der Lichtaustrittsfläche 20.2. In diesem Fall würden Temperaturanstiege dazu führen, dass sich die Lichtleiterabschnitte 38 in Richtung zu den Halbleiterlichtquellen 18 ausdehnen würden. Im Extremfall würde die Lichteintrittsfläche des Lichtleiterabschnitts 38 auf der Halbleiterlichtquelle aufsetzen und dort einen mehr oder weniger starken Druck auf deren Lichtaustrittsfläche ausüben. Das kann zur Folge haben, dass die lichttechnisch gewollte Einkopplung von Licht gestört wird und als Folge unerwünschte Farbeffekte und/oder Effizienzeinbußen in Kauf genommen werden müssen.

Außerdem könnte es zu einer Verformung des Lichtleiterabschnitts 38 kommen, so dass die Leuchtdichteverteilung an seiner Lichtaustrittsfläche inhomogen wird. Die Primäroptik 43 nach Fig. 3a stellt damit für sich keine Realisierung von Merkmalen der Erfindung dar.

Diese unerwünschten Effekte werden dadurch vermieden, dass die Lage der Lichteintrittsfläche der Primäroptik 20 auch bei Temperaturänderungen in Relation zu den Lichtaustrittsflächen der an der Basisstruktur 30 befestigten Halbleiterlichtquellen 18 konstant ist oder sich in vorbestimmter Weise verhält.

Die Figuren 3b bis d zeigen verschiedene Möglichkeiten, mit denen dies im Rahmen von Ausgestaltungen erreicht wird. Fig. 3b) zeigt eine Ausgestaltung, bei der Stützen 44 der Halterung 32 aus dem gleichen Material wie die Lichtleiterabschnitte 38 bestehen und auch etwa gleich lang wie die Lichtleiterabschnitte 38 sind.

Mit anderen Worten: Fig. 3b zeigt eine Ausgestaltung, bei der die Halterung 32 der Primäroptik 20 aus dem gleichen Material besteht wie die Primäroptik 20 und bei der eine Ausdehnung der Halterung 32 zwischen ihrem Primäroptik-seitigen Ende und ihrem Basisstruktur-seitigen Ende der Ausdehnung der Primäroptik in dieser Richtung entspricht. Die Ausdehnung der Primäroptik entspricht in etwa der Ausdehnung der Lichtleiterabschnitte.

Bei exakt gleicher Länge werden sich durch Temperaturänderungen hervorgerufene Längenänderungen gerade kompensieren: Eine thermisch bedingte Vergrößerung der Länge der Lichtleiterabschnitte würde die Lichteintrittsfläche der Primäroptik 20 relativ zu ihrer Lichtaustrittsfläche nach links verschieben. Die Lichtaustrittsfläche wird aber durch eine thermisch bedingte Längenänderung der Stützen nach rechts verschoben, so dass eine Kompensation eintritt. Der Absolutbetrag jeder einzelnen Längenänderung ist dabei bekanntlich jeweils proportional zur Ursprungslänge und zur Temperaturänderung.

Die Längenänderung der Stützen 44 entspricht dann genau der Längenänderung der Primäroptik 20. Dadurch bewegt sich die Lichtaustrittsfläche 20.2 der Primäroptik 20 entlang der optischen Achse 36 in Bezug auf die Lage der Sekundäroptik 22 hin oder zurück, so dass der Abstand d2 temperaturabhängig ist. Der Abstand d1 zwischen der Lichtaustrittsfläche der Halbleiterlichtquellen und der Lichteintrittsfläche der Primäroptik bleibt dagegen konstant.

Gestaltet man die Stützen 44 etwas länger, wird sich die Lichtaustrittsfläche bei einem Temperaturanstieg etwas nach rechts verschieben. Gestaltet man die Stützen 44 etwas kürzer, wird sich die Lichtaustrittsfläche etwas nach links verschieben. Durch eine Variation der Länge der Stützen lässt sich demnach konstruktiv festlegen, ob eine Teilkompensation, eine vollständige Kompensation oder eine Überkompensation der thermisch bedingten Längenänderung der Primäroptik 20 erfolgt.

Dies gilt analog für die Ausgestaltungen, die in den Figuren 3c) und 3d) dargestellt sind. Fig. 3c zeigt eine Ausgestaltung mit vergleichsweise kurzen Stützen 44, die ein Material 46 aufweisen, das eine größere Wärmeausdehnung zeigt als das Material der Lichtleiterabschnitte 38. Die Fig. 3c) zeigt damit eine Ausgestaltung, bei der die Halterung der Primäroptik zumindest abschnittsweise aus einem Material mit einer größeren Wärmeausdehnung besteht als die Primäroptik und eine parallel zu dem Abstand zwischen dem Primäroptik-seitigen Ende der Halterung 32 und der Lichteintrittsfläche der Primäroptik verlaufende Ausdehnung dieser Halterung zwischen ihrem Primäroptik-seitigen Ende und ihrem Basisstruktur-seitigen Ende kleiner als die Ausdehnung der Primäroptik in dieser Richtung ist.

Fig. 3d zeigt eine Ausgestaltung, mit vergleichsweise langen Stützen 44, die ein Material 48 aufweisen, das eine geringere Wärmeausdehnung zeigt als das Material der Lichtleiterabschnitte 38. Die Fig. 3d) zeigt damit eine Ausgestaltung, bei der die Halterung der Primäroptik zumindest abschnittsweise aus einem Material mit einer kleineren Wärmeausdehnung besteht als die Primäroptik und eine parallel zu dem Abstand zwischen dem Primäroptik-seitigen Ende der Halterung 32 und der Lichteintrittsfläche der Primäroptik verlaufende Ausdehnung der Halterung zwischen ihrem Primäroptik-seitigen Ende und ihrem Basisstruktur-seitigen Ende größer als die Ausdehnung der Primäroptik in dieser Richtung ist.

Alle drei Ausgestaltungen von Primäroptiken 20, wie sie in den Figuren 3b), c), und d) dargestellt sind, weisen das gemeinsame Merkmal auf, dass ein Primäroptik-seitiges Ende der Halterung 32 der Primäroptik 20 näher an der Lichtaustrittsfläche als an der Lichteintrittsfläche der Primäroptik angeordnet ist, so dass ein Abstand zwischen dem Primäroptik-seitigen Ende und der Lichteintrittsfläche besteht.

Mit guter Näherung kann angenommen werden, dass eine thermisch bedingte Längenänderung der Primäroptik keine signifikanten Veränderungen der Leuchtdichteverteilung (Intensitätsverteilung) auf der Lichtaustrittsfläche 20.2 der Primäroptik 20 verursacht. Änderungen des Abstandes d2, die durch eine Längenänderung der Primäroptik 20 hervorgerufen werden, führen jedoch zu einer Defokussierung der durch die Sekundäroptik 22 erfolgenden Abbildung der genannten Leuchtdichteverteilung auf der Fahrbahn vor dem Scheinwerfer 10.

Zur Vermeidung oder Verringerung dieses unerwünschten Effektes sieht eine weitere Ausgestaltung eine Kompensation der thermisch bedingten Änderung des Abstandes d2 vor.

Wie bereits erwähnt wurde, ist die Halterung, die der erfindungsgemäße Scheinwerfer aufweist, dazu eingerichtet, einen Wert des Abstands zwischen einer der Lichtaustrittsflächen und der Lichteintrittsfläche, die aus dieser Lichtaustrittsfläche austretendes Licht aufnimmt, in Abhängigkeit von einer im Scheinwerfer auftretenden Temperaturänderung durch eine eigene, thermisch bedingte Längenänderung der wenigstens einen Halterung auf einen Sollwert einzustellen.

In Bezug auf eine Kompensation thermisch bedingter Änderungen des Abstandes d2 zwischen der Lichtaustrittsfläche 20.2 der Primäroptik 20 und der Lichteintrittsfläche 22.1 der Sekundäroptik 22 sieht eine weitere Ausgestaltung vor, dass die Halterung eine Halterung 34 der Sekundäroptik 22 aufweist und dass die eine der Lichtaustrittsflächen die Lichtaustrittsfläche 20.2 der Primäroptik 20 ist.

Mit anderen Worten: Diese Ausgestaltung sieht vor, dass sich der Wert des Abstands d2 zwischen der Lichtaustrittsfläche 20.2 der Primäroptik 20 und der Lichteintrittsfläche 22.1 der Sekundäroptik 22, die aus dieser Lichtaustrittsfläche 20.2 austretendes Licht aufnimmt, in Abhängigkeit von einer im Scheinwerfer 10 auftretenden Temperaturänderung durch eine eigene, thermisch bedingte Längenänderung der Halterung 34 der Sekundäroptik 22 auf einen Sollwert einstellt.

Für die Ausgestaltung der Halterung 34 der Sekundäroptik 22 bieten sich prinzipiell die gleichen Möglichkeiten an, die unter Bezug auf die Halterung 32 der Primäroptik 20 erläutert worden sind. Bei der Übertragung dieser Prinzipien ist natürlich darauf zu achten, dass die Ursprungslänge der Halterung 34 bereits eine andere ist als die Ursprungslänge der Primäroptik 20 und ihrer Halterung 32.

Für die geometrische Ausgestaltung der Halterung 34 bieten sich verschiedene Möglichkeiten an: So kann die Halterung 34 zylindrisch, kegelförmig oder in Form einzelner Stützen realisiert sein, ohne dass diese Aufzählung abschließend gemeint ist. Entscheidend ist, dass das ausgewählte Material in Verbindung mit der Geometrie der Halterung 34 definiert und nach Vorgabe seine Länge ändert, so dass die Temperatur-bedingte Verschiebung der Lichtaustrittsfläche 20.2 der Primäroptik 20 kompensiert wird.

Damit erfolgt eine thermo-mechanische Anpassung des Abstands d2 zwischen Primäroptik 20 und Sekundäroptik 22 in Analogie zur Kompensation thermisch bedingter Änderungen des Abstands d1 zwischen der Lichtaustrittsfläche der Halbleiterlichtquellen und der Lichteintrittsfläche 22.1 der Sekundäroptik 22.

Zusätzlich erlaubt die Erfindung eine Kompensation einer Vergrößerung der Brennweite der abbildenden Sekundäroptik 22. Eine solche Vergrößerung ergibt sich daraus, dass die Brechzahlen der für die Sekundäroptik eingesetzten Materialien im Allgemeinen mit der Temperatur abnehmen oder sich zumindest ändern. Außerdem vergrößert eine thermische Ausdehnung die Krümmungsradien der Optik. Das bedeutet, dass man das System für verschiedene Temperaturen innerhalb des gewünschten Temperatur-Einsatzbereiches optisch und thermo-mechanisch berechnen muss, um die Geometrie geeignet festzulegen und ein von seinen thermischen Eigenschaften her passendes Material auszuwählen.

Eine bevorzugte Ausgestaltung zeichnet sich dadurch aus, dass die Halterung 34 der Sekundäroptik 22 dazu eingerichtet ist, eine Vergrößerung der Brennweite, die durch eine Temperaturänderung der Sekundäroptik 22 bedingt ist, zu kompensieren. Die Brennweite entspricht dabei ungefähr dem Abstand d2.

Bevorzugt ist auch, dass eine erste Halterung die Halterung 32 der Primäroptik 20 ist, eine erste der Lichtaustrittsflächen die Lichtaustrittsfläche der wenigstens einen Halbleiterlichtquelle ist, und dass eine weitere Halterung die Halterung 34 der Sekundäroptik 22 ist und dass eine weitere der Lichtaustrittsflächen die Lichtaustrittsfläche 20.2 der Primäroptik 20 ist.

Die Größenordnung der thermischen Ausdehnung der Primäroptik 20 längs der optischen Achse liegt für typische Anwendungen bei Kraftfahrzeugscheinwerfern bei etwa 0,5mm. In der gleichen Größenordnung wird die dazu erforderliche Verschiebung der Sekundäroptik 22 sein. Die Änderung der Brechzahl der Sekundäroptik 22 wird zusätzlich eine Vergrößerung der Brennweite in vergleichbarer Größenordnung generieren. Um die Abbildungsschärfe unter Zulassung eines sich geringfügig ändernden Abbildungsmaßstabes zu erhalten, wird daher eine zusätzliche Verschiebung der Sekundäroptik 22 vorteilhaft.

Mit einem Gesamtkonzept von entsprechenden Halterungen 32, 34 der Primäroptik 20 und der abbildenden Sekundäroptik 22 ist es möglich, den Temperatureinfluss auf die lichttechnischen Scheinwerfer-Charakteristika auf ein Minimum zu reduzieren.

## Patentansprüche

1. Kraftfahrzeugscheinwerfer (10), der eine Anordnung (14) wenigstens einer, eine Lichtaustrittsfläche (16.2, 18.2) aufweisenden Halbleiterlichtquelle (16, 18) aufweist und der dazu eingerichtet ist, Licht der Anordnung (14) über eine Primäroptik (20) auf eine Sekundäroptik (22) zu richten, wobei die Primäroptik (20) dazu eingerichtet ist, Licht der Anordnung (14) über eine Lichteintrittsfläche (20.1) der Primäroptik (20) aufzunehmen und über eine
Lichtaustrittsfläche (20.2) der Primäroptik (20) auszukoppeln, wobei die Primäroptik mehrere matrixartig angeordnete Lichtleiterabschnitte (38.1, 38.2, ...) mit totalreflektierenden Eigenschaften umfasst, und wobei die Sekundäroptik (22) dazu eingerichtet ist, aus der Lichtaustrittsfläche (20.2) der Primäroptik (20) ausgekoppeltes Licht über eine Lichteintrittsfläche (22.1) der Sekundäroptik (22) aufzunehmen und wobei die Anordnung (14) der wenigstens einen Halbleiterlichtquelle (16, 18), die Primäroptik (20) und die Sekundäroptik (22) durch wenigstens eine Halterung (32; 34) an einer Basisstruktur (30) befestigt sind, **dadurch gekennzeichnet, dass** die wenigstens eine Halterung (32; 34) dazu eingerichtet ist, einen Wert des Abstands (d1, d2)) zwischen einer der Lichtaustrittsflächen (16.2, 18.2; 20.2) und der Lichteintrittsfläche (20.1; 22.1), die aus dieser Lichtaustrittsfläche (16.2, 18.2; 20.2)austretendes Licht aufnimmt, in Abhängigkeit von einer im Scheinwerfer (10) auftretenden Temperaturänderung durch eine eigene, thermisch bedingte Längenänderung der wenigstens einen Halterung (32; 34) auf einen Sollwert einzustellen, wobei eine erste Halterung der wenigstens einen Halterung die Halterung (32) der Primäroptik (20) ist,
eine erste der Lichtaustrittsflächen die Lichtaustrittsfläche (16.2), (18.2) der wenigstens einen Halbleiterlichtquelle (16, 18) ist, und eine erste der Lichteintrittsflächen die Lichteintrittsfläche der Primäroptik ist, wobei eine lichtleitende Länge der Primäroptik, die zwischen ihrer Lichteintrittsfläche und ihrer
Lichtaustrittsfläche liegt, zwischen 5 mm und 15 mm liegt und der Abstand (d1) zwischen der Lichtaustrittsfläche der Halbleiterlichtquelle und der Lichteintrittsfläche der Primäroptik wenige Zehntel eines Millimeters beträgt, und wobei die Halterung der Primäroptik an die Primäroptik angeformt ist und ein Primäroptik-seitiges Ende und ein Basisstruktur-seitiges Ende aufweist, wobei das Primäroptikseitige Ende näher an der Lichtaustrittsfläche der Primäroptik als an der Lichteintrittsfläche der Primäroptik angeordnet ist, so dass ein Abstand zwischen dem Primäroptik-seitigen Ende der Halterung und der Lichteintrittsfläche der Primäroptik besteht.

2. Kraftfahrzeugscheinwerfer (10) nach Anspruch 1, **dadurch gekennzeichnet, dass** die Halterung (32) der Primäroptik (20) dazu eingerichtet ist, eine durch eine Temperaturänderung der Primäroptik (20) bedingte Änderung des Abstands zu kompensieren.

3. Kraftfahrzeugscheinwerfer (10) nach Anspruch 2, **dadurch gekennzeichnet, dass** die Halterung (32) der Primäroptik (20) aus dem gleichen Material besteht wie die Primäroptik (20) und eine parallel zu dem genannten Abstand verlaufende Ausdehnung dieser Halterung (32) zwischen ihrem Primäroptik- seitigen Ende und ihrem Basisstruktur-seitigen Ende der Ausdehnung der Primäroptik (20) in dieser Richtung entspricht.

4. Kraftfahrzeugscheinwerfer (10) nach Anspruch 2, **dadurch gekennzeichnet, dass** die Halterung (32) der Primäroptik (20) zumindest abschnittsweise aus einem Material (46) mit einer größeren Wärmeausdehnung besteht als die Primäroptik (20) und eine parallel zu dem genannten Abstand verlaufende Ausdehnung dieser Halterung (32) zwischen ihrem Primäroptik-seitigen Ende und ihrem Basisstruktur-seitigen Ende kleiner als die Ausdehnung der Primäroptik (20) in dieser Richtung ist.

5. Kraftfahrzeugscheinwerfer (10) nach Anspruch 2, **dadurch gekennzeichnet, dass** die Halterung (32) der Primäroptik (20) zumindest abschnittsweise aus einem Material (48) mit einer kleineren Wärmeausdehnung besteht als die Primäroptik (20) und eine parallel zu dem genannten Abstand verlaufende Ausdehnung der Halterung (32) zwischen ihrem Primäroptik-seitigen Ende und ihrem Basisstruktur-seitigen Ende größer als die Ausdehnung der Primäroptik (20) in dieser Richtung ist.

6. Kraftfahrzeugscheinwerfer (10) nach Anspruch 1, **dadurch gekennzeichnet, dass** eine weitere Halterung der wenigstens einen Halterung (32; 34) eine Halterung (34) der Sekundäroptik (22) ist und dass eine weitere Lichtaustrittsfläche die Lichtaustrittsfläche (20.2) der Primäroptik (20) ist.

7. Kraftfahrzeugscheinwerfer (10) nach Anspruch 6, **dadurch gekennzeichnet, dass** die Halterung (34) der Sekundäroptik (22) dazu eingerichtet ist, eine Temperatur-bedingte Verschiebung der Lichtaustrittsfläche (20.2) der Primäroptik (20) zu kompensieren.

8. Kraftfahrzeugscheinwerfer (10) nach Anspruch 6 oder 7, **dadurch gekennzeichnet, dass** die Halterung (34) der Sekundäroptik (22) dazu eingerichtet ist, eine Vergrößerung der Brennweite der Sekundäroptik (22), die durch eine Temperaturänderung der Sekundäroptik (32) bedingt ist, zu kompensieren.

## Claims

1. A motor vehicle headlight (10), which has an arrangement (14) of at least one semiconductor light source (16, 18) that has a light exit face (16.2, 18.2) and which is arranged for directing light from the arrangement (14) via a primary lens element (20), at a secondary lens element (22), the primary lens element (20) being arranged for receiving light from the arrangement (14) via a light entry face (20.1) of the primary lens element (20) and decoupling it via a light exit face (20.2) of the primary lens element (20), the primary lens element including a plurality of fiber-optical waveguide segments (38.1, 38.2, ...) that have total-reflection properties and are arranged in matrixlike fashion, and the secondary lens element (22) being arranged for receiving light decoupled from the light exit face (20.2) of the primary lens element (20) via a light entry face (22.1) of the secondary lens element (22), and the arrangement (14) consisting of the at least one semiconductor light source (16, 18), the primary lens element (20), and the secondary lens element (22) is secured by means of at least one mount (32; 34) on a base structure (30), **characterized in that** the at least one mount (32; 34) is arranged for adjusting a value of the spacing (d1, d2) between one of the light exit faces (16.2, 18.2; 20.2) and the light entry face (20.1; 22.1) that receives light exiting from this light exit face (16.2, 18.2; 20.2) to a set-point value as a function of a temperature change occurring in the headlight (10) as a result of a thermally caused change in length of the at least one mount (32; 34) itself; and a first mount of the at least one mount is the mount (32) of the primary lens element (20); a first one of the light exit faces is the light exit face (16.2), (18.2) of the at least one semiconductor light source (16, 18); and a first of the light entry faces is the light entry face of the primary lens element, and a light conducting length of the primary lens element that is located between its light entry face and its light exit face is between 5 mm and 15 mm, and the spacing (d1) between the light exit face of the semiconductor light source and the light entry face of the primary lens element amounts to a few tenths of a millimeter; and the mount of the primary lens element is integrally formed onto the primary lens element and has one end toward the primary lens element and one end toward the base structure, and the end toward the primary lens element is located closer to the light exit face of the primary lens element than to the light entry face of the primary lens element, so that there is a spacing between the end of the mount toward the primary lens element and the light entry face of the primary lens element.

2. The motor vehicle headlight (10) of claim 1, **characterized in that** the mount (32) of the primary lens element (20) is arranged to compensate for a change in the spacing caused by a temperature change of the primary lens element (20).

3. The motor vehicle headlight (10) of claim 2, **characterized in that** the mount (32) of the primary lens element (20) comprises the same material as the primary lens element (20), and an elongation, extending parallel to said spacing, of this mount (32) between its end toward the primary lens element and its end toward the base structure is equivalent to the elongation of the primary lens element (20) **in that** direction.

4. The motor vehicle headlight (10) of claim 2, **characterized in that** the mount (32) of the primary lens element (20) at least in some portions comprises a material (46) having a greater thermal expansion than the primary lens element (20), and an elongation, extending parallel to said spacing, of this mount (32) between its end toward the primary lens element and its end toward the base structure is less than the elongation of the primary lens element (20) **in that** direction.

5. The motor vehicle headlight (10) of claim 2, **characterized in that** the mount (32) of the primary lens element (20) at least in some portions comprises a material (48) having a lesser thermal expansion than the primary lens element (20), and an elongation, extending parallel to said spacing, of this mount (32) between its end toward the primary lens element and its end toward the base structure is greater than the elongation of the primary lens element (20) **in that** direction.

6. The motor vehicle headlight (10) of claim 1, **characterized in that** a further mount of the at least one mount (32; 34) is a mount (34) of the secondary lens element (22); and that a further light exit face is the light exit face (20.2) of the primary lens element (20).

7. The motor vehicle headlight (10) of claim 6, **characterized in that** the mount (34) of the secondary lens element (22) is arranged to compensate for a temperature-caused displacement of the light exit face (20.2) of the primary lens element (20).

8. The motor vehicle headlight of claim 6 or 7, **characterized in that** the mount (34) of the secondary lens element (22) is arranged to compensate for an increase in the focal length of the secondary lens element (22) that is caused by a temperature change of the secondary lens element (32).

## Revendications

1. Phare de véhicule automobile (10), comportant un agencement (14) d'au moins une source lumineuse à semi-conducteurs (16, 18) comportant une surface de sortie de lumière (16.2, 18.2) et conçu pour orienter la lumière de l'agencement (14) passant par un système optique principal (20) sur un système optique secondaire (22), le système optique principal (20) étant conçu pour recevoir la lumière de l'agencement (14) passant par une surface d'entrée de lumière (20.1) du système optique principal (20) et pour la découpler via une surface de sortie de lumière (20.2) du système optique principal (20), le système optique principal comprenant plusieurs sections conductrices de lumière (38.1, 38.2, ...) disposées de façon matricielle avec des propriétés de réflexion totale de la lumière et le système optique secondaire (22) étant conçu pour recevoir la lumière découplée à partir de la surface de sortie de lumière (20.2) du système optique principal (20) via une surface d'entrée de lumière (22.1) du système optique secondaire (22) et l'agencement (14) de l'au moins une source lumineuse à semi-conducteurs (16, 18), le système optique principal (20) et le système optique secondaire (22) étant fixés à une structure de base (30) par au moins un support (32; 34), **caractérisé en ce que** l'au moins un support (32; 34) est conçu pour régler, pour l'amener à une valeur théorique, une valeur de la distance (d1, d2) entre une des surfaces de sortie de lumière (16.2, 18.2; 20.2) et la surface d'entrée de lumière (20.1; 22.1) recevant la lumière sortant de cette surface de sortie de lumière (16.2, 18.2; 20.2), en fonction d'un changement de température se produisant dans le phare (10), par le biais d'un changement de longueur propre conditionné par la température de l'au moins un support (32; 34), un premier support de l'au moins un support étant le support (32) du système optique principal (20) et une première surface parmi les surfaces de sortie de lumière étant la surface de sortie de lumière (16.2), (18.2) de l'au moins une source lumineuse à semi-conducteurs (16, 18) et une première surface parmi les surfaces d'entrée de lumière étant la surface d'entrée de lumière du système optique principal, une longueur conductrice de lumière du système optique principal entre sa surface d'entrée de lumière et sa surface de sortie de lumière étant comprise entre 5 mm et 15 mm et la distance (d1) entre la surface de sortie de lumière de la source lumineuse à semi-conducteurs et la surface d'entrée de lumière du système optique principal étant de quelques dixièmes de millimètre et le support du système optique principal étant formé au niveau du système optique principal et comportant une extrémité de côté de système optique principal et une extrémité de côté de structure de base, l'extrémité de côté de système optique principal étant placée plus près de la surface de sortie de lumière du système optique principal que de la surface d'entrée de lumière du système optique principal, de façon à maintenir une distance entre l'extrémité de côté de système optique principal du support et la surface d'entrée de lumière du système optique principal.

2. Phare de véhicule automobile (10) selon la revendication 1, **caractérisé en ce que** le support (32) du système optique principal (20) est conçu pour compenser un changement de distance conditionné par un changement de température du système optique principal (20).

3. Phare de véhicule automobile (10) selon la revendication 2, **caractérisé en ce que** le support (32) du système optique principal (20) est composé du même matériau que le système optique principal (20) et qu'une dilatation de ce support (32) s'étendant parallèlement à ladite distance entre son extrémité de côté de système optique principal et son extrémité de côté de structure de base correspond à la dilatation du système optique principal (20) dans cette direction.

4. Phare de véhicule automobile (10) selon la revendication 2, **caractérisé en ce que** le support (32) du système optique principal (20) se compose au moins en partie d'un matériau (46) présentant une plus grande dilatation thermique que celle du système optique principal (20) et qu'une dilatation s'étendant parallèlement à ladite distance de ce support (32) entre son extrémité de côté de système optique principal et son extrémité de côté de structure de base est inférieure à la dilatation du système optique principal (20) dans cette direction.

5. Phare de véhicule automobile (10) selon la revendication 2, **caractérisé en ce que** le support (32) du système optique principal (20) se compose au moins en partie d'un matériau (48) présentant une dilatation thermique inférieure à celle du système optique principal (20) et qu'une dilatation du support (32) s'étendant parallèlement à ladite distance entre son extrémité de côté de système optique principal et son extrémité de côté de structure de base est supérieure à la dilatation du système optique principal (20) dans cette direction.

6. Phare de véhicule automobile (10) selon la revendication 1, **caractérisé en ce qu'**un support supplémentaire de l'au moins un support (32; 34) est un support (34) du système optique secondaire (22) et qu'une surface de sortie de lumière supplémentaire est la surface de sortie de lumière (20.2) du système optique principal (20).

7. Phare de véhicule automobile (10) selon la revendication 6, **caractérisé en ce que** le support (34) du système optique secondaire (22) est conçu pour compenser un coulissement conditionné par la température de la surface de sortie de lumière (20.2) du système optique principal (20).

8. Phare de véhicule automobile (10) selon la revendication 6 ou 7, **caractérisé en ce que** le support (34) du système optique secondaire (22) est conçu pour compenser un allongement de la distance focale du système optique secondaire (22) conditionné par un changement de température du système optique secondaire (32).
